# EUROPEAN PATENT APPLICATION

(11) **EP 0 771 098 A2**
(43) Date of publication of application: **02.05.1997**
(21) Application number: 96110767.9
(22) Date of filing: 03.07.1996
(51) Int. Cl.: H04L 29/06

(54) **Circuits, systems and methods for providing resource allocation in a communication system**

(30) Priority: 25.09.1995 US 533045
(71) Applicant: AT&T Corp., New York, NY 10013-2412 (US)
(72) Inventor: Isenberg, David Saul, Westfield, N.J. 07090 (US); Aykin, Nuray, Holmdel, N.J. 07733 (US); Lewis, Steven H., Middletown, N.J. 07748 (US); Mane, Amir M., Lincroft, N.J. 07738 (US); Milewski, Allen E., Red Bank, N.J. 07701 (US); Neal, David Nicholas, Middletown, N.J. 07716 (US); Roesler, Marina L., Westfield, N.J. 07090 (US)
(74) Representative: KUHNEN, WACKER & PARTNER

(57) **Abstract**

Circuits, methods and systems are provided for allocating resources in a communication system. A data link is selectively provided between a terminal and at least one of a plurality of communication resources. A memory, an interface and circuitry are provided. The memory is operative to store a plurality of records wherein ones of the records are associated with ones of the communication resources. The interface is operative to receive a data packet including an urgency indicator. The circuitry is operative, as a function of the urgency indicator and at least one of the associated records, to select at least one of the plurality of communication resources. A data link is selectively provided between the terminal and the one or more selected communication resources.

## Description

### Technical Field of the Invention

The present invention relates generally to the field of telephony, and more particularly, to circuits, systems and methods that provide resource allocation in a communication system.

### Background of the Invention

Telecommunications involves the transmission of speech and/or data between two or more nodes in a communication system. Representative communication media include air, wire, fiber optic cable and the like. Representative communication systems and devices include wired, wireless and video telephony, pagers, voice mail and e-mail systems and the like.

Modern telecommunications has increased individual "reachability" as a result of continual breakthroughs in, and the emergence of new, communication technologies. Business people, for example, are typically required to leave multiple telephone numbers where, and/or beeper numbers through which, they may be reached. Callers must understand the different communication technologies available to reach a particular party, and then determine the optimum approach, considering cost, quality, availability, etc., to reach that party at a given time.

Unfortunately, incoming calls tend to interrupt individuals causing them to suffer a loss of productivity while performing some activity. Worse, the called party often decides that the interrupting call is less important than the present activity and defers responding to it until later.

Alternatively, two individuals may wish to have a conversation but each happens to be unavailable when the other is available. Each party wastes time and effort receiving messages to return the call of the other, only to find that the other party is again unavailable. This phenomenon is commonly referred to as "telephone tag".

One approach taken to deal with these deficiencies is to utilize secretarial/executive assistant support to answer and manage incoming calls. This is expensive. The approach also does not adapt well to emerging communication technologies such as wireless telephony, e-mail systems, message paging and the like. The inability to significantly minimize the effects of the foregoing deficiencies remains a dominant obstacle to producing more efficient and intelligent telecommunication systems and devices.

### Summary of the Invention

Broadly, the present invention is directed to circuits, methods and systems that provide resource allocation for intelligent communication. The invention provides communication management functionality that requires a minimum of user control. Conversations between users are enabled automatically, choosing one or more optimum communication resources and avoiding unnecessary and annoying interruptions. A calling party simply specifies the party or parties with whom it wishes to speak and the urgency of the call. The parties are automatically connected in an optimum manner and at an optimum time.

The principles of the present invention are particularly beneficial when used to provide a data link for communication between two or more terminals. Representative communication devices include without limitation wired, wireless (e.g., vehicular and hand-held cellular telephones) and video telephony, personal, notebook/laptop and hand-held computers ("PCs"), suitably arranged pay-telephones, message paging, voice mail and e-mail systems and the like.

An exemplary resource allocation circuit in accordance with the principles of the present invention may suitably be used in a communication system capable of supporting communication session scheduling. The circuit preferably includes a memory and an interface. The memory is operative to store a plurality of records, while the interface is operative to receive a data packet. Ones of the plurality of records are associated with ones of a plurality of communication resources. The data packet includes an urgency indicator. The circuit is operative, as a function of at least one of the plurality of associated records and the urgency indicator, to select at least one of the plurality of communication resources.

A system in accordance with the principles of the present invention selectively provides at least one data link between a terminal and at least one of a plurality of communication resources. The terminal and the one or more communication resources are operative to transmit and/or receive one or more data packets via the one or more selectively provided data links.

The system preferably includes a memory and an interface. The memory is operative to store a plurality of records wherein ones of the records are associated with ones of the communication resources. The interface is operative to receive a transmitted data packet from the terminal. At least a portion of the transmitted data packet indicates an urgency level for providing the one or more data links. The circuit is operative, as a function of at least one of the plurality of associated records and the portion of the transmitted data packet, to provide selectively the one or more data links between the terminal and the one or more communication resources.

An important aspect is that any system, and in particular any circuit, in accordance with the principles of the present invention may suitably be hardware, firmware or processing system based.

A method in accordance with the principles of the present invention concerns the allocation of resources in a communication system. A data packet is received and includes an urgency indicator. Particular ones of a plurality of records are accessed from their respective storage locations in a memory, wherein ones of the plurality of records are associated with ones of a plurality of communication resources. At least one of the plurality of communication resources is selectively allocated as a function of the urgency indicator and at least one of the plurality of associated records.

One embodiment for using and/or distributing the present invention is as software. The software embodiment includes a plurality of processing instructions which are stored to a conventional storage medium. The instructions are readable and executable by one or more processing systems having one or more processing units. The instructions, upon execution, operate to control the one or more processing units to allocate communication resources of a communication system. Preferred storage media include without limitation magnetic, optical, and semiconductor, as well as suitably arranged combinations thereof.

The foregoing has outlined, rather broadly, preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention in its broadest form.

### Brief Description of the Drawings

For a more complete understanding of the present invention, reference is now made to the following descriptions taken in conjunction with the accompanying drawings in which like designations represent like parts, and in which:
FIG. 1 illustrates a conceptual block diagram of a plurality of exemplary communication resources available to a user in accordance with the principles of the present invention;
FIG. 2 illustrates a block diagram of one of the exemplary communication resources of FIG. 1;
FIG. 3 illustrates a block diagram of one exemplary microprocessing system which may suitably be utilized in conjunction with any of the exemplary communication resources of FIGS. 1 and 2;
FIG. 4 illustrates a block diagram of an exemplary communication system capable of supporting communication session scheduling in accordance with the principles of the present invention;
FIG. 5 illustrates a block diagram of another exemplary communication system in accordance with the principles of the present invention;
FIG. 6 illustrates a conceptual block diagram of a memory, and an exemplary configuration of the same, in accordance with the principles of the present invention; and
FIG. 7 illustrates a flow diagram for selecting at least one of a plurality of communication resources and providing at least one data link between a terminal and one or more selected communication resources in accordance with the principles of the present invention.

### Detailed Description

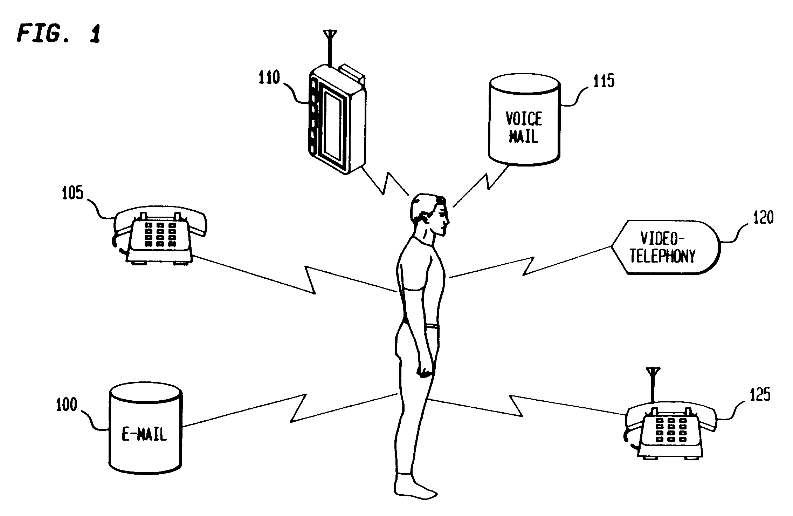

FIG. 1 illustrates a conceptual block diagram of a plurality of exemplary communication resources that are available to a user in accordance with the principles of the present invention. The illustrated user has access to an e-mail system 100, a wired telephony system 105, a beeper or message paging system 110, a voice mail system 115, a video telephony system 120, a wireless telephony system 125 and the like.

Each of the foregoing communication resources 100 to 125 may suitably be arranged to operate in conjunction with a communication system capable of supporting communication session scheduling in accordance with the principles of the present invention.

"Communication session scheduling" as used herein includes without limitation establishing a data link or connection at an optimum time between two or more terminals using the optimum communication resources available, and enabling communication therebetween. Communication session scheduling also often includes "negotiation" between the two or more terminals to set the optimum time to establish the data links. "Data link" as used herein includes without limitation any suitable hardware, firmware and/or software configuration that enables a plurality of terminals to communicate, i.e., to transmit and receive one or more data packets, such as over a communication channel. "Terminal" as used herein includes without limitation any station, device, apparatus and/or the like wherein at least one communication resource is used to transmit and/or receive one or more data packets. "Data packet" as used herein includes without limitation any signal, sequence of data or other variation in a physical quantity that is used to convey information.

As will be discussed in greater detail herein, a communication signal received from a first terminal is processed, and in response thereto, at least one communication resource is selected, thereby establishing a second terminal.

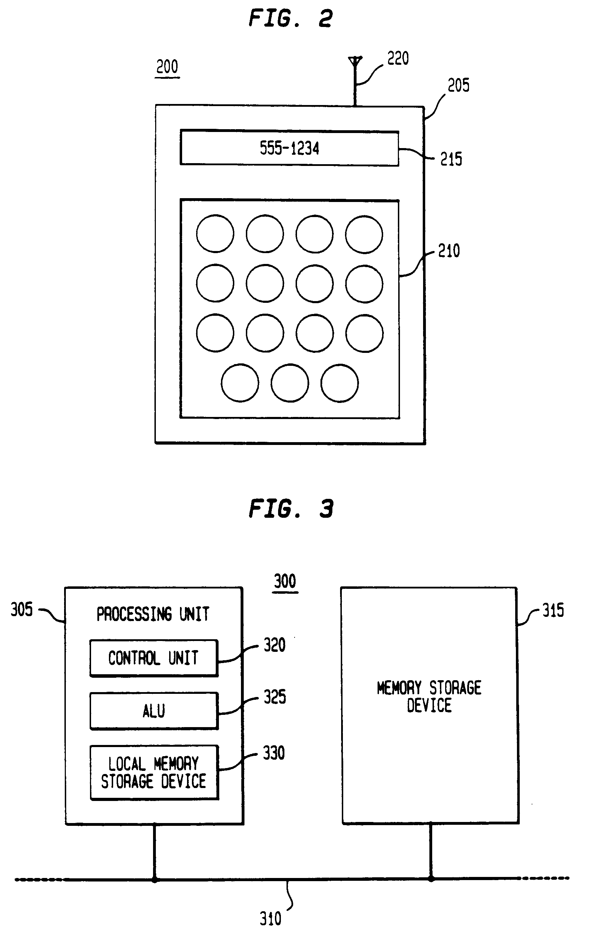

FIG. 2 illustrates an exemplary communication resource 200, a wireless telephone, having a housing 205, a keypad 210, a display 215 and a suitably arranged antenna 220. Keypad 210 preferably includes a set of keys or control levers having a systematic arrangement used to operate wireless telephone 200. Display 215 provides a visible representation of information, such as a telephone number for example, presented in graphical or character form. Wireless antenna 220 is operative to transmit and receive communication signals between wireless telephone 200 and at least one terminal via a suitable communication system.

In accordance with the illustrated embodiment, keypad 210 is further operative to provide an interface or input device through which one or more scheduling signals may suitably be received from the user of wireless telephone 200. "Scheduling signals" as used herein include without limitation electromagnetic signals, whether generated electrically, mechanically or by other suitable means, used to select an urgency level for a particular call the user is initiating/transmitting, and/or a priority level indicating the importance of the user's current activity, i.e., the user's availability.

With reference to FIG. 1, one or more priority levels associated with particular ones of the communication resources 100 to 125 are compared with the urgency level associated with an incoming call to determine which of the communication resources are available for response. One example of a suitable priority and/or urgency coding scheme may suitably use "1" for extreme emergency only to "9" for a low level activity available, with values therebetween representing other levels of activity. Development of an appropriate implementation/scheme for scheduling signals is application specific.

In alternate embodiments, scheduling signals may suitably be received from one or more other suitably arranged interfaces or alternatively from a scheduling apparatus, such as a PC, personal communication assistant ("PCA") or the like, running a conventional suitable time management program. Such scheduling signals may suitably be received over a wired or wireless data link through a parallel or serial port (not shown) of wireless telephone 200.

In alternate embodiments, exemplary communication resource 200 may suitably include at least two apparatus, or devices, wherein a first apparatus is a portable communication device and a second is some other suitable communication device, such as a wired telephony device, for example. Each apparatus is suitably equipped with an antenna and a keypad. Each antenna is suitably arranged to provide a data link for wireless communication between the first and second apparatus. Each keypad preferably includes a set of keys or control levers, again having a systematic arrangement used to operate the portable communication and wired telephony devices. The keypad of the portable apparatus is preferably further operative to provide an interface through which one or more scheduling signals may suitably be entered.

One aspect of any multiple apparatus resource in accordance with the present invention is that the first apparatus may be implemented in a compact and light embodiment capable of being continuously worn by a user. The second apparatus may in point of fact be wired or wireless.

Other preferred embodiments, whether embodied in a single or multiple apparatus communication resource, include without limitation vehicular wireless telephony, suitably arranged PCs and PCAs, specially equipped pay telephones and/or the like. An important aspect of the present invention is that the receiving and transmitting means may suitably be configured to receive and/or transmit either voice and/or data communication signals, including video data.

It should be noted that the interface provided by keypad 210 is illustrative only and that the associated functionality may suitably be provided by any means operative to receive a scheduling input from a user and in response thereto to generate a scheduling signal.

FIG. 3 illustrates a block diagram of one exemplary microprocessing system 300 which may suitably be utilized in conjunction with the exemplary communication resources of FIGS. 1 and 2. Microprocessing system 300 includes a single processing unit 305 coupled via data bus 310 with a single memory storage device 315. Memory storage device 315 is suitably operative to store data and/or one or more processing system instructions which processing unit 305 is operative to retrieve and execute. Memory storage device 315 may be any suitable memory storage device or plurality thereof.

Processing unit 305 includes a control unit 320, an arithmetic logic unit ("ALU") 325 and a local memory storage device 330 (e.g., stackable cache, a plurality of registers, etc.). Control unit 320 is operative to fetch processing system instructions from memory storage device 315. ALU 325 is operative to perform a plurality of operations, including addition and Boolean AND, needed to carry out those instructions. Local memory storage device 330 is operative to provide local high speed storage used for storing temporary results and control information.

In alternate exemplary embodiments, microprocessing system 300 may suitably be replaced by, or combined with, without limitation, programmable logic devices, such as PALs (programmable array logic) and PLAs (programmable logic arrays), DSPs (digital signal processors), FPGAs (field programmable gate arrays), ASICs (application specific integrated circuits), VLSIs (very large scale integrated circuits) and/or the like. Further, processing unit 305 and memory storage device 315 may be implemented separately in multiple apparatus.

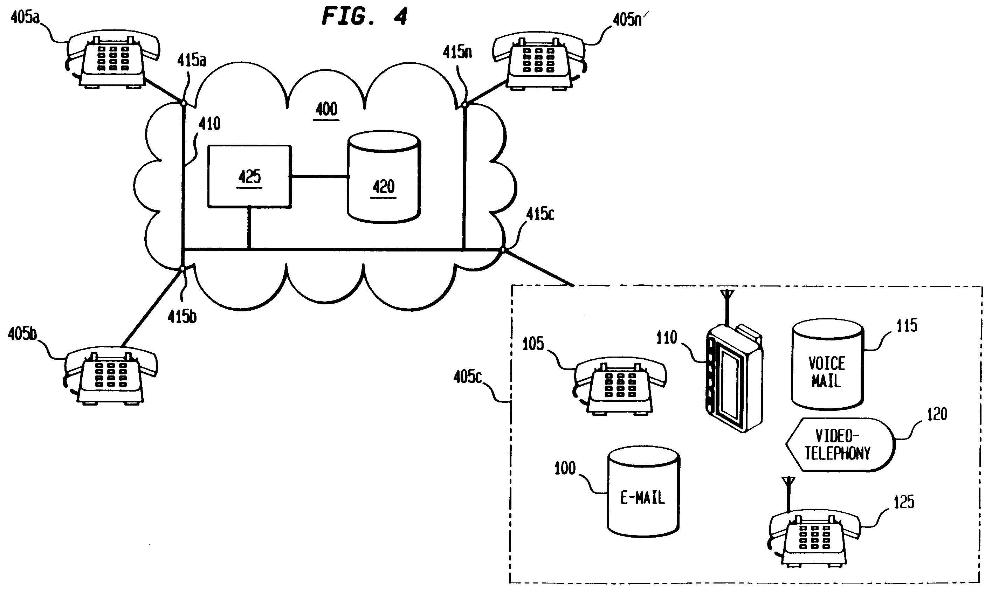

FIG. 4 illustrates a block diagram of an exemplary communication system 400 capable of supporting communication session scheduling in accordance with the principles of the present invention. System 400 includes a plurality of exemplary terminals 405a to 405n, wherein illustrative terminal 405c includes a plurality of exemplary communication resources 100 to 125. The set of communication resources is presented for illustrative purposes, this set is neither inclusive nor exclusive. System 400 is operative to provide selectively one or more data links 410 between particular ones of terminals 405a to 405n, wherein each of terminals 405 is operative to transmit and/or receive one or more data packets via one or more selectively provided data links 410.

System 400 includes without limitation a plurality of interfaces, or input ports, 415a to 415n, at least one memory 420 and circuitry 425. Interfaces 415a to 415n are operative to receive at least a first data packet transmitted from a first terminal, such as terminal 405b, to at least a second terminal, such as terminal 405c, for example. At least a portion of the first data packet is representative of an urgency level for providing a data link therebetween.

Memory, such as memory 420 or, alternatively, memory storage device 315 of FIG. 3, is preferably associated with each terminal and is operative to store at least one data set for ones of the communication resources associated with each of terminals 405. Each data set represents the availability of its associated terminal 405 to respond to a received data packet. A particular terminal's availability may suitably be related to temporal, communication channel, processing resource and/or other suitable measurable characteristics of the particular terminal.

Preferably, each data set includes one or more records wherein ones of the one or more records are associated with ones of a plurality of resources, such as communication resources 100 to 125 associated with second terminal 405c. One or more of the records preferably indicate the availability of one or more of the associated communication resources to respond to an incoming call, such as the first data packet received by second terminal 405c.

In the event that two or more resources are available, a suitable heuristic may be used to select the optimum available resource.

Circuitry 425 is operative, as a function of the data set, or preferably at least one of the plurality of associated records, and the portion of the transmitted data packet, to provide a data link between first terminal 405b and second terminal 405c.

If the urgency level associated with the first data packet equals or exceeds the one or more records associated, for example, with one or more of telephony devices 105, 120 or 125, second terminal 405c preferably alerts the user to reception of the first data packet and establishes a data link. Establishment of the data link allows terminals 405b and 405c to suitably transmit voice and/or data signals therebetween.

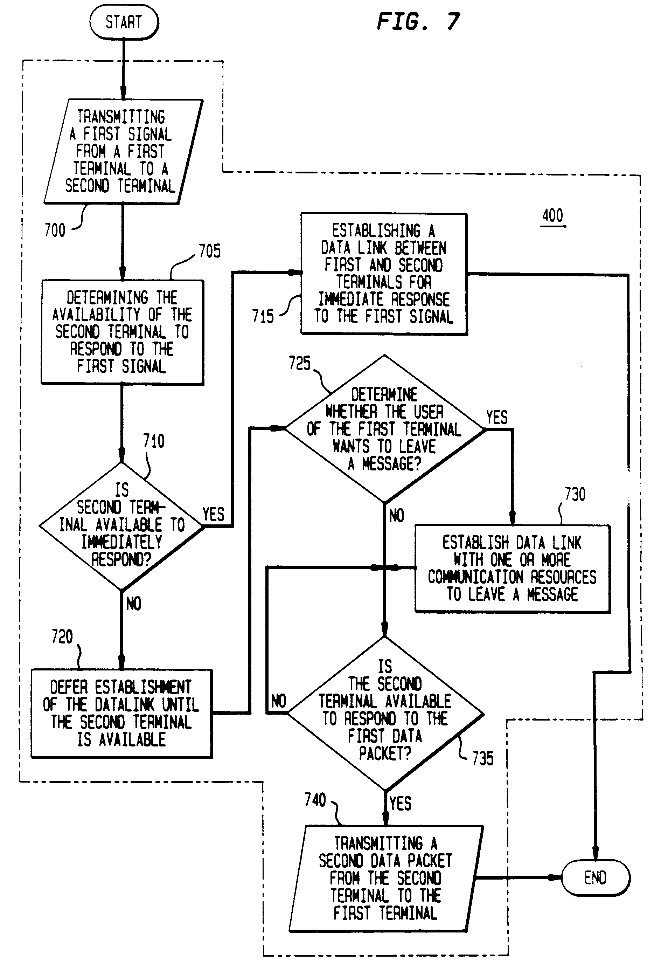

Alternatively, if the urgency level of the first data packet is less than the one or more records associated with telephony devices 105, 120 and 125, indicating that second terminal 405c is unavailable for immediate response to the first data packet, then circuitry 425 is operative to defer response until an optimum time. The caller may suitably be given an option to leave a message with a voice mail or e-mail system 115, 100, respectively. When the user becomes available, as will be discussed in greater detail with reference to FIG. 7, second terminal 405c is operative to transmit, as a function of the data set, or preferably at least one of the plurality of associated records, and the portion of the first data packet, a second data packet to at least first terminal 405b. At least a portion of the second data packet represents an urgency level associated therewith, i.e., the urgency with which the second data packet must be responded to by first terminal 405b.

In alternate embodiments, unavailable second terminal 405c and first terminal 405b are operable to negotiate an optimum time to establish a communication session. For example, if first terminal 405b is unavailable for two hours, second terminal 405c and first terminal 405b may suitably schedule a communication session after the two hour period. Recall, as discussed above, the development of a preferable urgency and/or availability coding scheme is application dependent.

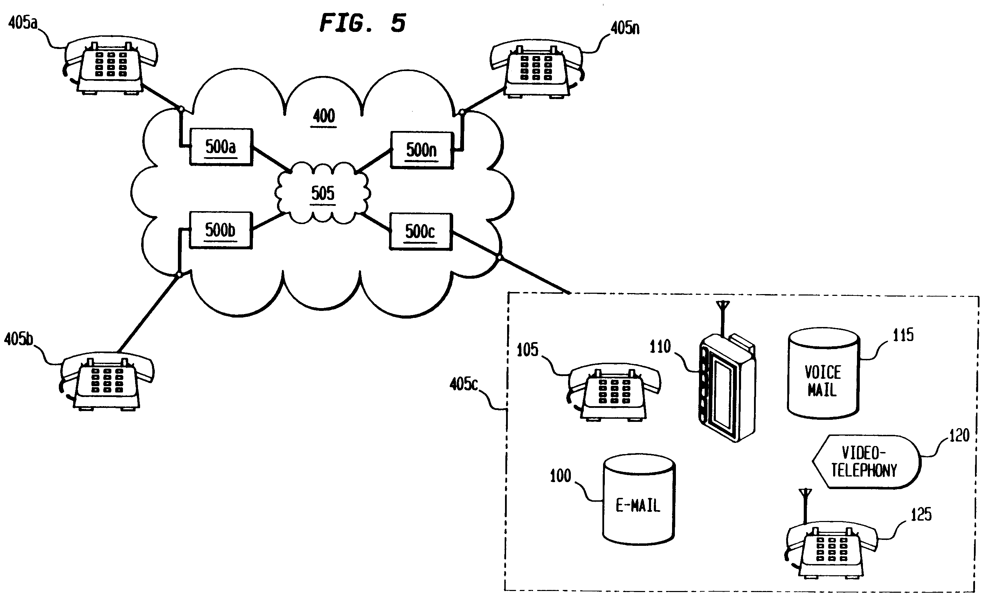

FIG. 5 illustrates a block diagram of another exemplary communication system 400 in accordance with the principles of the present invention. Communication system 400 includes a plurality of processing systems 500a to 500n which are in operative communication with one another via a suitable communication network 505. Each processing system 500 preferably includes one or more processing units which are in operative communication with at least one memory, such as memory storage device 315 or memory 420 of FIGS. 3 or 4, respectively.

It should be noted that any processing system capable of functioning in accordance with communication system 400 and/or communication network 505 may suitably replace, or be utilized in conjunction with, any of processing systems 500, including without limitation, videophones, telephones, televisions, sophisticated calculators and, hand-held, laptop/notebook, personal, mini, mainframe and super computers, including RISC and parallel processing architectures, as well as within processing system network combinations of the foregoing. Conventional processing system architecture is more fully discussed in Computer Organization and Architecture, by William Stallings, MacMillan Publishing Co. (3rd ed. 1993), which is incorporated herein by reference.

Alternatively, any of processing systems 500 may suitably be combined with or replaced by, without limitation, programmable logic devices, as was discussed with reference to FIG. 3. It should be noted also that although each terminal 405 is suitably coupled with a single processing system 500, in point of fact, each terminal 405 may suitably be coupled with a plurality of processing systems 500. Similarly, each processing system 500 may suitably be coupled with a plurality of terminals 405, such as a public switched telephone network ("PSTN") switching office for example.

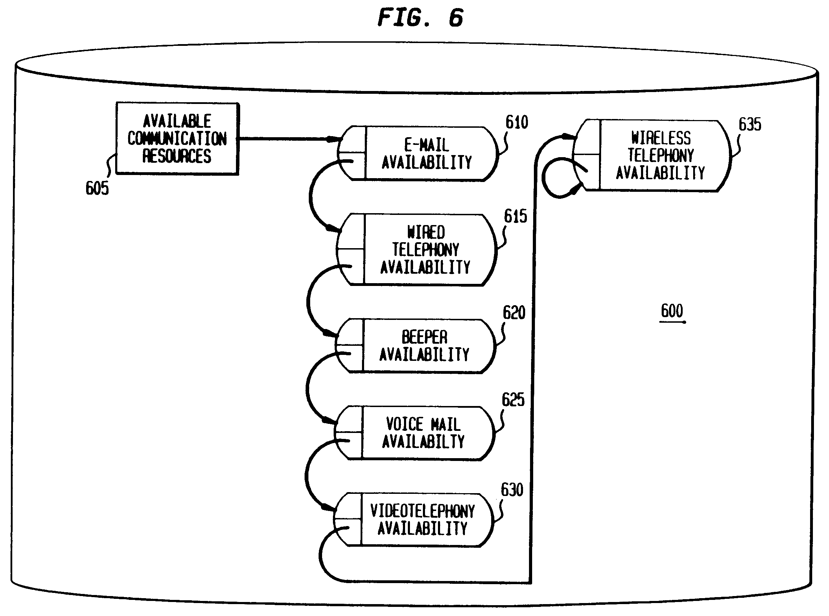

FIG. 6 illustrates a conceptual block diagram of a conventional memory 600 and an exemplary configuration of same in accordance with the principles of the present invention. Memory 600 may suitably be, without limitation, either memory storage device 315 or memory 420, and may be used in conjunction processing unit 305 or circuit 425, respectively, for example. In alternate embodiments, memory 600 may suitably be used with one or more of processing systems 500.

Exemplary memory 600 is configured to include a single address pointer 605. Pointer 605 may suitably be associated with one or more terminals 405, and operates to identify a linked list representing a plurality of communication resources available to the one or more associated terminals 405. The exemplary linked list includes a plurality of linked nodes 610 to 635. In accordance with the illustrated configuration, a segment of each linked node 610 to 635 represents the availability of a particular communication resource to respond to the received first data packet.

The data configuration of FIG.6 is provided for illustrative purposes only. Any suitable data structure or conventional memory configuration, including without limitation, linked lists, arrays, matrices, data bases and the like, may be used in place of, or in conjunction with, that illustrated herein.

FIG. 7 illustrates a flow diagram for operating communication system 400, and more particularly for selecting at least one of a plurality of communication resources and providing at least one data link between at least a first and a second terminal in accordance with the principles of the present invention. Each terminal 405 is preferably operative to transmit and/or receive at least one data packet via communication system 400.

For illustrative purposes, this process is discussed with reference to FIG. 5. A first data packet is initiated and transmitted from a first terminal 405b to at least a second terminal 405c (input/output block 700). At least a portion of the first data packet preferably represents an urgency level, i.e., the urgency with which a data link or communication session must be established between the first and second terminals.

The call is initiated when a user utilizing a suitable interface for receiving a scheduling input begins a communication session. The scheduling input may suitably indicate one or more parties to be called and an associated urgency level for the communication session and/or each particular call. In addition, the caller may enter a deadline for the communication session and/or each call, an estimated length for the communication session, a topic statement and/or the like. First terminal 405b accesses communication system 400 which is suitably operative to transmit a calling signal to each of the called parties.

Communication system 400 is preferably further operative to identify the caller using conventional techniques, such as retrieving relevant information from memory if the caller is a subscriber of the same ISDN PBX system, for example, or alternatively, to use conventional ANI techniques to identify the caller. System 400 may also prompt the caller for other information.

Communication system 400 operates to determine the availability of second terminal 405c to respond to the first data packet using the portion of the first data packet representing its urgency level (processing block 705). Preferably, communication system 400 also accesses and uses a data set from memory that represents the availability of second terminal 405c to respond.

Second terminal 405c preferably includes a plurality of communication resources 100 to 125. The data set includes a plurality of records wherein ones of the records are associated with ones of the plurality of resources. One or more of the records indicate the availability of one or more of the associated communication resources to respond to an incoming call.

In the event that at least one communication resources 100 to 125 of second terminal 405c is available to immediately respond to the first data packet (YES branch of decision block 710), a data link, or communication session, is established between first and second terminals 405b and 405c, respectively (process block 715). The party using second terminal 405c is preferably alerted with relevant information regarding the calling signal, such as the caller's name, for example.

In other words, if the urgency level associated with the first data packet equals or exceeds one or more records associated with, for example, one or more of telephony devices 105, 120 or 125, second terminal 405c alerts the user of the reception of the first data packet and establishes the data link.

Communication system 400 is operative to establish each communication session using the optimum technology available. In the event that two or more resources are available, a suitable heuristic may be used to select the optimum available resource.

In the event that no communication resources of second terminal 405c are available to immediately respond to the first data packet, communication system 400 is suitably operative to defer, as a function of the portion the first data packet representing the urgency of the call, establishment of the data link, or communication session, until second terminal 405c is available (process block 720).

In deferring the call, communication system 400 is operative, if the caller so desires, to establish a data link with one or more communication resources to leave a message for the user of second terminal 405c (YES branch of decision block 725). For example, the caller may suitably be connected with a voice and/or data recording system, such as voice mail, e-mail and/or paging services 115, 100 and 110, respectively (process block 730).

Communication system 400 is operative to monitor second terminal 405c, and more particularly, communication resources 105, 120 and 125, to determine when same becomes available to respond to the communication session request of first terminal 735 (decision block 735). For example, following a meeting, the user of second terminal 405c returns to his office and modifies his priority level, lowering same to reflect the importance of his current activity. Communication system 400 will begin the process of completing deferred calls with an urgency level that is greater than the new priority level setting. Communication system 400 is operative to transmit (YES branch of decision block 735), as a function of the availability of second terminal 405c and the portion of the first data packet, a second data packet from second terminal 405c to at least first terminal 405b (input/output block 740). At least a portion of the second data packet represents the urgency associated therewith.

In the event that first terminal 405b is unavailable at this time, communication system 400 will defer establishing a communication session until later. Communication system 400 is operative to automatically connect a plurality of terminals at a time that is mutually convenient. An important aspect of the invention is the substantial, if not complete, elimination of "telephone tag".

In accordance with particular embodiments, the user upon becoming available to respond may be offered an option to review, and reprioritize, deferred calls, such as by modifying their assigned urgency level and/or by directly overriding the order in which they are awaiting response, for example.

In other embodiments, deferred calls may be responded to according to priority, associated deadlines, estimated call length, time period the call has remained deferred, and/or the like.

In still further embodiments, if the user's schedule has been received from a suitably arranged scheduling apparatus, such as a PC, PCA or the like, running a time management program, the scheduling apparatus will anticipate the date, time and priority of the user's next activity and will not return a particular deferred call having an estimated call length that is greater than the time currently remaining before the user's next activity.

Importantly, communication system services in accordance with the present invention may suitably be "personalized" for particular individuals. For example, individuals who are generally in their offices and do not require or wish to use pager and/or fill personal communication system services may receive interruption management, massaging, and/or deferred call management services only.

Although the present invention has been described in detail, those skilled in the art should understand that they can make various changes, substitutions and alterations herein without departing from the spirit and scope of the invention in its broadest form.

## Claims

1. A resource allocation circuit for use in a communication system capable of supporting communication session scheduling, said circuit comprising:
a memory operative to store a plurality of records wherein ones of said plurality of records are associated with ones of a plurality of communication resources;
an interface operative to receive a first data packet including an urgency indicator; and
circuitry operative, as a function of at least one of said plurality of associated records and said urgency indicator, to select at least one of said plurality of communication resources.

2. The resource allocation circuit set forth in claim 1 wherein ones of said plurality of records include at least a subset representative of the availability of an associated communication resource to respond to said first data packet.

3. The resource allocation circuit as set forth in claim 1 wherein said circuitry is further operative to transmit a second data packet from one or more of said communication resources to at least said terminal, said second data packet including an urgency indicator.

4. The resource allocation circuit as set forth in claim 3 wherein said second data packet is transmitted as a function of at least one of said plurality of associated records and said urgency indicator.

5. The resource allocation circuit as set forth in claim 3 wherein said circuitry is further operative to defer transmitting said second data packet until one or more of said communication resources is available.

6. The resource allocation circuit as set forth in claim 5 wherein transmission of said second data packet is deferred as a function of at least one of said plurality of associated records and said urgency indicator.

7. The resource allocation circuit as set forth in claim 1 wherein said circuitry is further operative to compare at least one of said plurality of associated records and said urgency indicator.

8. The resource allocation circuit as set forth in claim 6 further comprising a PSTN switching office and wherein said circuitry is integral with said PSTN switching office.

9. A method for allocating at least one of a plurality of communication resources in a communication system, said method
CHARACTERIZED BY:
receiving a first data packet including an urgency indicator;
accessing ones of a plurality of records stored in a memory, wherein said ones of said plurality of records are associated with ones of said plurality of communication resources; and
selectively allocating, as a function of said urgency indicator and at least one of said ones of said plurality of associated records, at least one of said plurality of communication resources.

10. The method set forth in claim 9 further including the step of modifying a portion of at least one of said plurality of records, wherein said one or more modified portions represent the availability of one or more of said communication resources.

11. The method as set forth in claim 9 further including the step of transmitting a second data packet from one or more of said communication resources to at least said terminal, said second data packet including an urgency indicator.

12. The method as set forth in claim 11 wherein said transmitting step further includes the step of using at least one of said plurality of associated records and said urgency indicator.

13. The method as set forth in claim 12 further including the step of deferring transmission of said second data packet until one or more of said communication resources is available.

14. The method as set forth in claim 13 wherein said deferring step further includes the step of using at least one of said plurality of associated records and said urgency indicator.

15. The method as set forth in claim 9 further including the step of comparing at least one of said ones of said plurality of associated records and said urgency indicator.
